# EUROPEAN PATENT SPECIFICATION

(11) **EP 4 246 667 B1**
(45) Date of publication and mention of the grant of the patent: **28.10.2026**
(21) Application number: 22892993.1
(22) Date of filing: 01.09.2022
(51) Int. Cl.: H01M 10/655, H01M 10/658, H01M 10/613, H01M 50/204, H01M 10/653, H01M 50/289, H01M 10/6551, H01M 10/6555, H01M 10/6556

(54) **HEAT DISSIPATION MEMBER AND BATTERY PACK INCLUDING THE SAME**
WÄRMEABLEITUNGSELEMENT UND BATTERIEPACK DAMIT
ÉLÉMENT DE DISSIPATION DE CHALEUR ET BLOC-BATTERIE LE INCLUANT

(30) Priority: 15.11.2021 KR 20210156869
(43) Date of publication of application: 20.09.2023
(73) Proprietor: LG Energy Solution, Ltd., Seoul 07335 (KR)
(72) Inventor: YOON, Doohan, Daejeon 34122 (KR); SON, Changkeun, Daejeon 34122 (KR)
(74) Representative: Plasseraud IP
(86) International application number: PCT/KR2022/013134
(87) International publication number: WO 2023/085570

(56) References cited:
- EP-A1- 3 534 429
- JP-A- 2020 113 387
- JP-A- 2021 163 538
- JP-B2- 5 871 067
- KR-A- 20110 118 807
- KR-A- 20150 127 863
- KR-A- 20200 068 234
- US-A1- 2011 198 335
- US-A1- 2020 358 152

## Description

### [TECHNICAL FIELD]

### Cross Citation with Related Application(s)

This application claims the benefit of Korean Patent Application No. 10- 2021-0156869 filed on November 15, 2021 with the Korean Intellectual Property Office.

The present disclosure relates to a heat dissipation member and a battery pack including the same, and more particularly to a heat dissipation member that can effectively dissipate heat while preventing heat propagation between adjacent battery modules, and a battery pack including the same.

### [BACKGROUND]

As mobile device technology continues to develop and demand therefor continues to increase, demand for secondary batteries as energy sources is rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while middle or large-sized devices such as vehicles require high power and large capacity. Therefore, a middle or large-sized battery module having a plurality of battery cells electrically connected to one another is used.

Since it is preferable for middle or large-sized battery modules to be manufactured with as small a size and weight as possible, a prismatic battery, a pouch-type battery, or the like, which can be stacked with high integration and has a small weight relative to capacity, is mainly used as a battery cell of the middle or large-sized battery modules.

However, the battery pack of the prior art may include a plurality of battery modules. When a part of the battery cells of the respective battery modules is thermally runaway and ignites or explodes, heat or flame is transmitted to the adjacent secondary battery, which causes occurrence of a secondary explosion or the like, and thus efforts to prevent secondary ignition or explosion increase.

Therefore, there is a need to develop a heat dissipation member that can effectively dissipate the generated heat while preventing heat transfer to adjacent battery modules when some battery modules in a battery pack ignite and then explode.

KR 2011 0118807, US 2020/358152 and US 2011/198335 relate to battery modules.

### [DETAILED DESCRIPTION OF THE INVENTION]

### [Technical Problem]

It is an object of the present disclosure to provide a heat dissipation member that can effectively dissipate heat while preventing heat propagation between adjacent battery modules, and a battery pack including the same.

However, the problem to be solved by the embodiments of the present disclosure is not limited to the above-described problems, and can be variously expanded within the scope of the technical idea included in the present disclosure.

### [Technical Solution]

The invention is defined in the set of claims. According to the invention, there is provided a heat dissipation member for a battery pack, comprising: a heat dispersion member including a first heat dispersion part and a second heat dispersion part; and a heat insulating member formed along an outer surface of the heat dispersion member.

The first heat dispersion part and the second heat dispersion part are integrally formed, and the first heat dispersion part and the second heat dispersion part are formed so as to be partially spaced apart from each other.

The first heat dispersion part and the second heat dispersion part are respectively bent and extended, and the directions in which the first heat dispersion part and the second heat dispersion part are bent may be directions opposite to each other.

The heat dissipation member further comprises a first depressed part formed in the first heat dispersion part, and a second depressed part formed in the second heat dispersion part.

The heat dissipation member further comprises a cooling member formed in the first depressed part and the second depressed part.

The heat dissipation member may further comprise a first indented part formed in the first heat dispersion part; and a second indented part formed in the second heat dispersion part, wherein the first indented part and the second indented part may be formed so as to contact each other.

According to another embodiment of the present invention, there is provided a battery pack according to claim 4, comprising: a plurality of battery modules; and a heat dissipation member located between adjacent battery modules among the plurality of battery modules, wherein the heat dissipation member comprises a heat dispersion member including a first heat dispersion part and a second heat dispersion part; and a heat insulation member formed along an outer surface of the heat dispersion member.

The heat insulation member may be formed between the heat dispersion member and the battery module.

The heat insulation member may be formed so as to be in contact with the battery module.

In the battery pack, the first heat dispersion part and the second heat dispersion part are integrally formed, and the first heat dispersion part and the second heat dispersion part are formed so as to be partially spaced apart from each other

In the battery pack, the first heat dispersion part and the second heat dispersion part are respectively bent and extended, and the directions in which the first heat dispersion part and the second heat dispersion part are bent may be directions opposite to each other.

The battery pack further comprises a first indented part formed in the first heat dispersion part; and a second indented part formed in the second heat dispersion part, wherein the first indented part and the second indented part may be formed so as to contact each other.

The battery pack further comprises a first depressed part formed in the first heat dispersion part, and a second depressed part formed in the second heat dispersion part.

The battery pack further comprises a cooling member formed in the first depressed part and the second depressed part.

The battery pack further comprise a pack frame that houses the plurality of battery modules, wherein the cooling member may be in contact with the upper part of the pack frame.

The cooling member may be in contact with the upper inner surface of the pack frame.

The battery pack according to yet another embodiment of the present disclosure may further comprise a thermal conductive resin layer formed between a lower part of the battery module and a bottom part of the pack frame.

The battery pack may further comprise a heat sink formed between a lower part of the thermal conductive resin layer and a bottom part of the pack frame.

### [Advantageous Effects]

According to the present invention, in the heat dissipation member and a battery pack including the same, the heat dispersion member included in the heat dissipation member is located between the heat insulation members, and a separation space is formed between the respective heat dispersion members, thereby capable of effectively dissipating heat while preventing heat propagation between the battery modules.

The effects of the present disclosure are not limited to the effects mentioned above and additional other effects not described above will be clearly understood from the detailed description and the appended drawings by those skilled in the art.

### [BRIEF DESCRIPTION OF THE DRAWINGS]

Fig. 1 is a perspective view showing a heat dissipation member according to one embodiment of the present disclosure;
Fig. 2 is a diagram showing a heat dispersion member included in the heat dissipation member of Fig. 1;
Fig. 3 is a diagram showing a cross section of the heat dispersion member of Fig. 2;
Fig. 4 is a diagram showing a state in which a heat dispersion member and a heat insulation member included in the heat dissipation member of Fig. 1 are coupled;
Fig. 5 is a diagram showing a state in which a cooling member to the heat dispersion member and the heat insulation member of Fig. 4 are coupled to form a heat dissipation member;
Fig. 6 is a diagram showing a battery pack according to another embodiment of the present disclosure;
Fig. 7 is a diagram showing a battery pack according to another embodiment of the present disclosure; and
Fig. 8 is a perspective view showing a battery module included in the battery pack of Figs. 6 and 7.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and areas are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

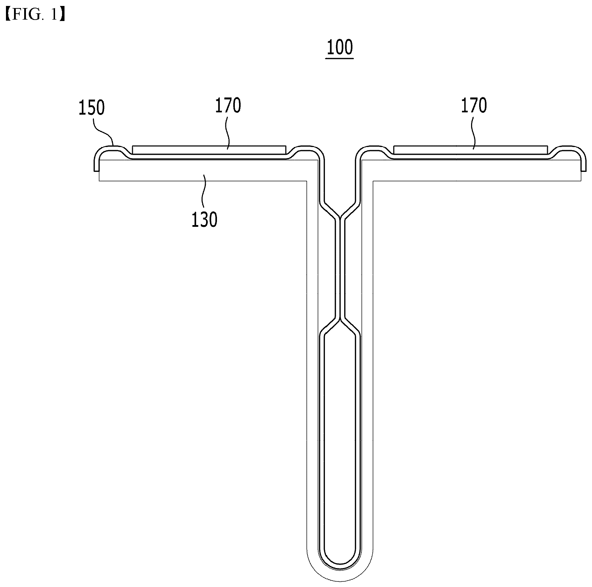

Hereinafter, a heat dissipation member according to one embodiment of the present disclosure will be described with reference to Figs. 1 to 5.

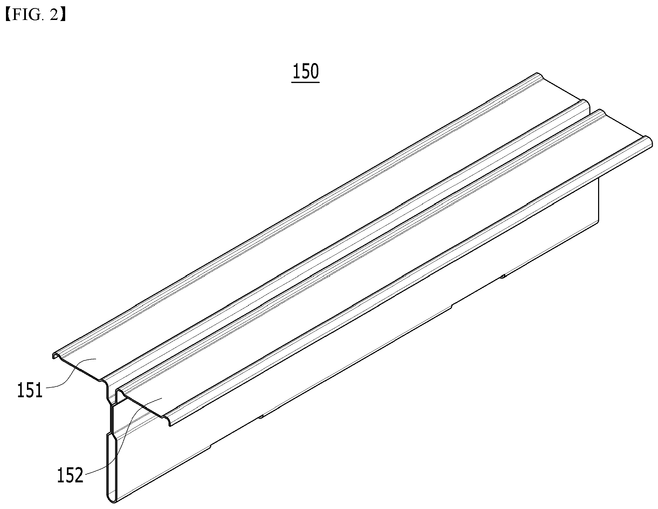

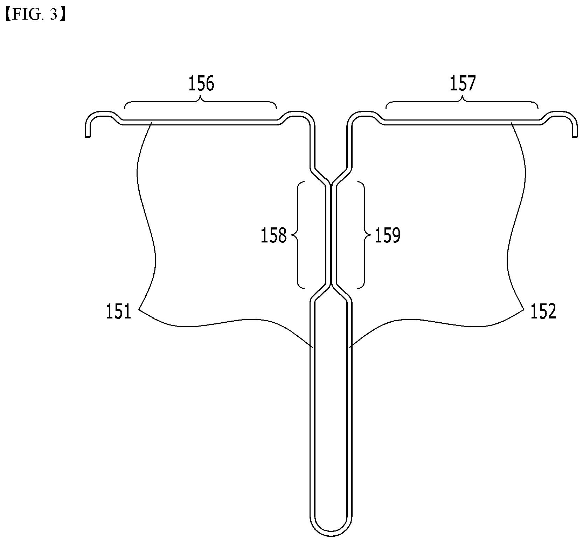

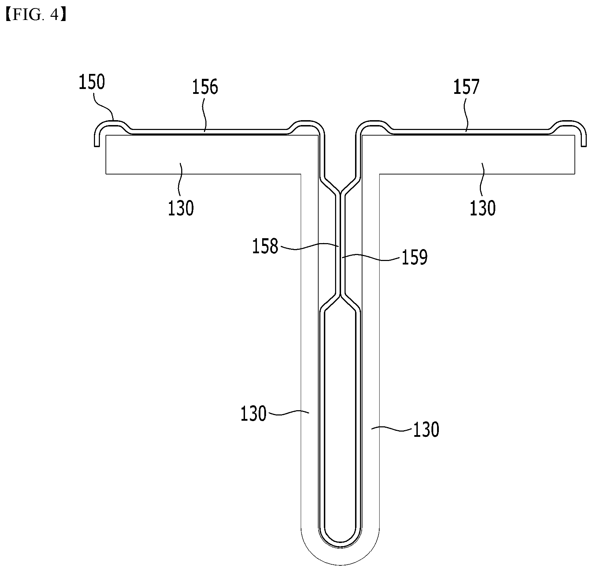

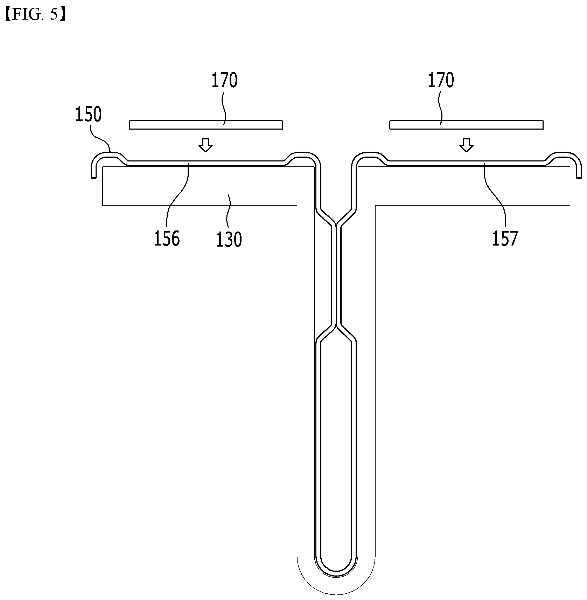

Fig. 1 is a perspective view showing a heat dissipation member according to one embodiment of the present disclosure. Fig. 2 is a diagram showing a heat dispersion member included in the heat dissipation member of Fig. 1. Fig. 3 is a diagram showing a cross section of the heat dispersion member of Fig. 2. Fig. 4 is a diagram showing a state in which a heat dispersion member and a heat insulation member included in the heat dissipation member of Fig. 1 are coupled. Fig. 5 is a diagram showing a state in which a cooling member to the heat dispersion member and the heat insulation member of Fig. 4 are coupled to form a heat dissipation member.

Referring to Fig. 1, the heat dissipation member 100 according to the present invention includes a heat dispersion member 150 including a first heat dispersion part 151 and a second heat dispersion part 152.

The heat dispersion member 150 includes a first heat dispersion part 151 and a second heat dispersion part 152 that are integrally formed. At this time, the first heat dispersion part 151 and the second heat dispersion part 152 are formed so as to be partially spaced apart from each other. Therefore, a space may be formed between the first heat dispersion part 151 and the second heat dispersion part 152.

The first heat dispersion part 151 and the second heat dispersion part 152 may be respectively bent and extended, and the directions in which the first heat dispersion part 151 and the second heat dispersion part 152 are bent may be directions opposite to each other. Specifically, the first heat dispersion part 151 may refer to the left area with respect to the center of the heat dispersion member 150 (see Fig. 3), and the second heat dispersion part 152 may refer to the right area. Therefore, as being away from a heat dispersion member 150 in which the first heat dispersion part 151 and the second heat dispersion part 152 are integrated, the first heat dispersion part 151 and the second heat dispersion part 152 may have bent portions. Therefore, as being bent as described above, the first heat dispersion part 151 and the second heat dispersion part 152 may have portions bent and extended in directions opposite to each other.

Meanwhile, referring to Figs. 2 and 3, the heat dissipation member 100 according to the present invention further includes a first depressed part 156 formed in the first heat dispersion part 151, and a second depressed part 157 formed in the second heat dispersion part 152. At this time, the first depressed part 156 may be formed in the bent and extended portion of the first heat dispersion part 151, and the second depressed part 157 may be formed in the bent and extended portion of the second heat dispersion part 152.

Further, the heat dissipation member 100 may further include a first indented part 158 formed in the first heat dispersion part 151 and a second indented part 159 formed in the second heat dispersion part 152. At this time, the first indented part 158 and the second indented part 159 may be formed adjacent to the lower end of the heat dispersion member 150 where the first heat dispersion part 151 and the second heat dispersion part 152 are integrated. In particular, the first indented part 158 and the second indented part 159 may be formed so as to contact each other. As the first indented part 158 and the second indented part 159 are in contact with each other, heat transferred to the first heat dispersion part 151 or the second heat dispersion part 152 can be rapidly transferred to the second heat dispersion part 152 or the first heat dispersion part 151. Thereby, by making it possible to form an additional heat transfer path in the heat dispersion member 150, together with a heat transfer path through the lower end of the heat dissipation member 150 where the first heat dispersion part 151 and the second heat dispersion part 152 are integrated, it is possible to improve the heat dissipation performance of the heat dispersion member 150.

Further, referring to Fig. 5, the heat dissipation member 100 according to the present invention further includes a cooling member 170 formed in the first depressed part 156 and the second depressed part 157. At this time, the cooling member 170 may be a cooling pad. The cooling pad may be formed of a silicon-based or acrylic-based material. Specifically, the cooling pad may be a silicone pad, a silicone rubber pad, a silicone polymer pad, or the like, and may be an acrylic pad, an acrylic polymer pad, or the like, but is not limited thereto. The cooling member 170 can cool the heat transferred from the heat dispersion member 150 of the heat dissipation member 100.

Meanwhile, referring to Figs. 4 and 5, the heat dissipation member 100 according to the present invention includes a heat insulation member 130 that is formed along the outer surface of the heat dispersion member 150. Specifically, the heat insulation member 130 may be formed at a part of the outer surface of the heat dispersion member 150. More specifically, the heat insulation member 130 may be formed on the outer surface of the lower end of the bent and extended portion of the outer surface of the heat dispersion member 150.

The heat insulation member 130 may not be formed on the inner surface of the heat dispersion member 150. At this time, a space formed between the first heat dispersion part 151 and the second heat dispersion part 152 of the heat dispersion member 150 may refer to as an inner surface of the heat dispersion member 150. Therefore, the heat insulation member 130 may not be formed on the inner surface of the heat dispersion member 150. This may facilitate heat transfer between the first heat dispersion part 151 and the second heat dispersion part 152 of the heat dispersion member 150. In particular, since the heat insulation member 130 may serve to block the heat propagation of heat moved from one of the heat dispersion parts 151 and 152, the movement of the moved heat to the other heat dispersion parts 152 and 151 may act as a disturbing factor. Therefore, the heat insulation member 130 according to the present embodiment is not formed on the inner surface of the heat dispersion member 150, thereby capable of securing heat transfer between the first heat dispersion part 151 and the second heat dispersion part 152.

At this time, the portion where the heat insulation member 130 is formed may be a portion that is in contact with the module frame 18 of the battery module 10 as will be described later. Therefore, due to the configuration of the heat insulation member 130, it is possible to effectively dissipate the generated heat while preventing heat transfer to adjacent battery modules 10 when the battery module 10 catches fire.

In addition, the heat dispersion member 150 may be made of a material such as aluminum (Al) or graphite. However, the material of the heat dispersion member 150 is not limited thereto, and any material having high thermal conductivity may be included in the present embodiment.

Further, the heat insulation member 130 may include a ceramic material. In one example, the ceramic material may be made of a material such as ceramic fiber. However, the material of the heat insulation member 130 is not limited thereto, and any material having high heat insulating properties may be included in the present embodiment.

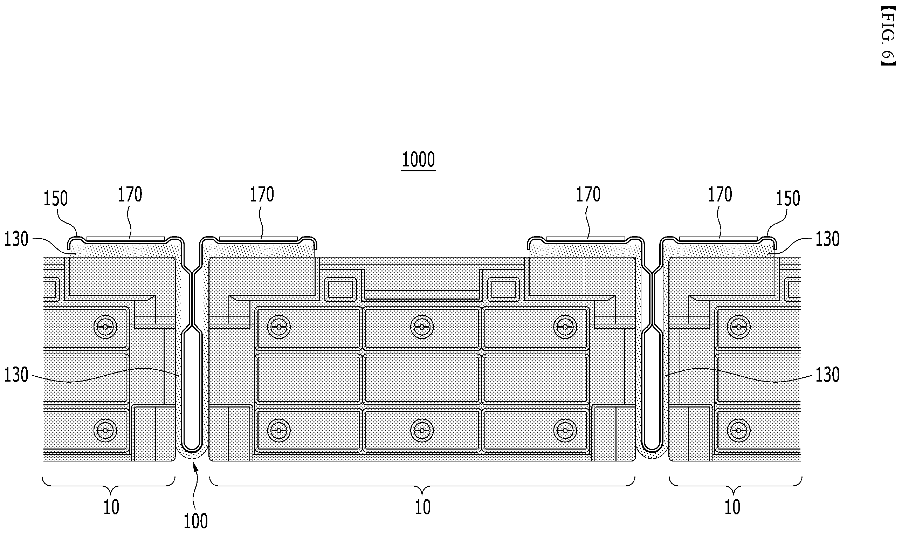

Next, a battery pack according to another embodiment of the present disclosure will be described with reference to Figs. 6 to 8. It can include all the contents of the heat dissipation member described above.

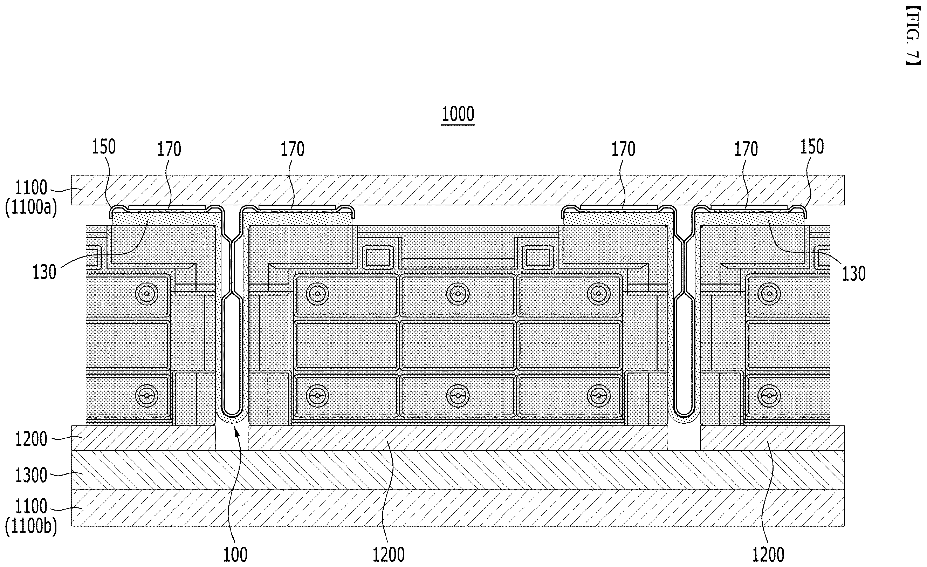

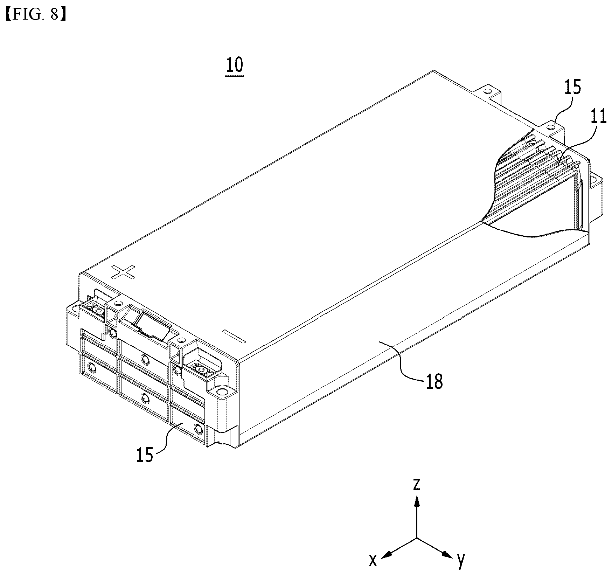

Fig. 6 is a diagram showing a battery pack according to another embodiment of the present disclosure. Fig. 7 is a diagram showing a battery pack according to another embodiment of the present disclosure. Fig. 8 is a perspective view showing a battery module included in the battery pack of Figs. 6 and 7.

Referring to Figs. 6 to 8, the battery pack 1000 according to the present invention includes a plurality of battery modules 10, a pack frame 1100 that houses the plurality of battery modules 10, and a heat dissipation member 100 located between adjacent battery modules 10 among a plurality of battery modules 10.

First, referring to Fig. 8, the battery module 10 included in the battery pack 1000 according to the present invention may configured such that a plurality of battery cells 11 are stacked in a preset direction and then mounted in the module frame 18. The plurality of battery cells 11 are not particularly limited in the type thereof, and may be a pouch-type secondary battery or a prismatic secondary battery.

At this time, the heat dissipation member 100 is a heat dissipation member 100 including all of the features set forth above. That is, the heat dispersion member 150 includes the first heat dispersion part 151 and the second heat dispersion part 152 that are integrally formed. At this time, the first heat dispersion part 151 and the second heat dispersion part 152 are formed so as to be partially spaced apart from each other. Therefore, a space may be formed between the first heat dispersion part 151 and the second heat dispersion part 152.

The first heat dispersion part 151 and the second heat dispersion part 152 may be respectively bent and extended, and the directions in which the first heat dispersion part 151 and the second heat dispersion part 152 are bent may be direction opposite to each other. Specifically, the first heat dispersion part 151 may refer to the left area with respect to the center of the heat dispersion member 150 (see Fig. 3), and the second heat dispersion part 152 may refer to the right area. Therefore, as being away from a heat dispersion member 150 in which the first heat dispersion part 151 and the second heat dispersion part 152 are integrated, the first heat dispersion part 151 and the second heat dispersion part 152 may have bent portions. Therefore, as being bent as described above, the first heat dispersion part 151 and the second heat dispersion part 152 may have portions bent and extended in directions opposite to each other. At this time, the portions bent and extended in directions opposite to each other as described above may be located in the battery pack 1000 so as to be adjacent to the upper part of the battery module 10. That is, the heat dissipation member 100 may be fitted and fixed between the pair of battery modules 10 so that the bent and extended portion of the heat dispersion member 150 is adjacent to the upper part of the battery module 10.

Meanwhile, the heat dissipation member 100 according to the present invention further includes a first depressed part 156 formed in the first heat dispersion part 151, and a second depressed part 157 formed in the second heat dispersion part 152. At this time, the first depressed part 156 may be formed in the bent and extended portion of the first heat dispersion part 151, and the second depressed part 157 may be formed in the bent and extended portion of the second heat dispersion part 152. In particular, the first depressed part 156 and the second depressed part 157 may be formed so as to be adjacent to the upper part of the battery module 10.

In addition, the heat dissipation member 100 may further include a first indented part 158 formed in the first heat dispersion part 151, and a second indented part 159 formed in the second heat dispersion part 152. At this time, the first indented part 158 and the second indented part 159 may be formed adjacent to the lower end of the heat dispersion member 150 where the first heat dispersion part 151 and the second heat dispersion part 152 are integrated. That is, the first indented part 158 and the second indented part 159 may be formed so as to be located between the pair of battery modules 10, and more specifically, it may be formed so as to be adjacent to the side surface part of the module frame 18 of the battery module 10.

At this time, the first indented part 158 and the second indented part 159 may be formed so as to contact each other. As the first indented part 158 and the second indented part 159 contact with each other, the heat transferred to the first heat dispersion part 151 or the second heat dispersion part 152 may be rapidly transferred to the second heat dispersion part 152 or the first heat dispersion part 151. That is, by making it possible to form an additional heat transfer path in the heat dispersion member 150 through the contact, together with the heat transfer path through the lower end of the heat dispersion member 150 where the first heat dispersion part 151 and the second heat dispersion part 152 are integrated, it is possible to improve the heat dissipation performance of the heat dispersion member 150.

In addition, the heat dispersion member 150 may be made of a material such as aluminum (Al) or graphite. However, the material of the heat dispersion member 150 is not limited thereto, and any material having high thermal conductivity may be included in the present embodiment.

At this time, the heat dissipation member 100 according to the present inventio further includes a cooling member 170 formed in the first depressed part 156 and the second depressed part 157. At this time, the cooling member 170 may be a cooling pad. The cooling member 170 can cool the heat transferred from the heat dispersion member 150 of the heat dissipation member 100. Further, the cooling member 170 according to the present embodiment may be in contact with the upper part 1100a of the pack frame 1100. More specifically, the cooling member 170 may be in contact with the inner surface of the upper part 1100a of the pack frame 1100. Therefore, when the battery module 10 catches fire, thermal energy may be rapidly transferred through the heat dissipation member 100 and the upper portion 1100a of the pack frame 1100 and discharged to the outside.

Meanwhile, referring to Figs. 4 and 5, the heat dissipation member 100 according to the present invention includes a heat insulation member 130 that is formed along the outer surface of the heat dispersion member 150. Specifically, the heat insulation member 130 may be formed at a part of the outer surface of the heat dispersion member 150. More specifically, the heat insulation member 130 may be formed on the outer surface of the lower end of the bent and extended portion of the outer surface of the heat dispersion member 150.

Further, the heat insulation member 130 may include a ceramic material. In one example, the ceramic material may be made of a material such as ceramic fiber. However, the material of the heat insulation member 130 is not limited thereto, and any material having high heat insulating properties may be included in the present embodiment.

Further, according to the present embodiment, the heat insulating member 130 of the heat dissipation member 100 may be formed between the heat dispersion member 150 and the battery module 10. More specifically, one side surface of one battery module 10 among the pair of battery modules 10 may be in contact with the heat insulation member 130, and one side surface of another battery modules 10 among the pair of battery modules 10 may also be in contact with the heat insulation member 130. Therefore, the heat insulation member 130 may be formed so as contact with the battery module 10.

Thus, in the present embodiment, when some battery modules ignite or explode, heat transfer between adjacent battery modules 10 can be blocked by the heat insulation member 130 of the heat dissipation member 100, thereby preventing continuous ignition or explosion due to heat propagation between adjacent battery modules 10.

In addition, referring to Fig. 7, the battery pack 1000 according to another embodiment of the present disclosure may further include a thermal conductive resin layer 1200 that is formed between the lower part of the battery module 10 and the bottom part 1100b of the pack frame 1100. Moreover, the battery pack 1000 may further include a heat sink 1300 that is formed between the thermal conductive resin layer 1200 and the bottom part 1100b of the pack frame 1100. Therefore, the heat generated in the battery module 10 can be transmitted to not only the heat dissipation member 100 but also the bottom part 1100b of the pack frame 1100 through the thermal conductive resin layer 1200 and the heat sink 1300 and discharged to the outside.

The battery pack can be applied to various devices. Such a device can be applied to vehicle means such as an electric bike, an electric vehicle, and a hybrid electric vehicle, but the present disclosure is not limited thereto, and is applicable to various devices that can use a battery module, which also falls under the scope of the present disclosure.

Although preferred embodiments of the present disclosure have been described in detail above, the scope of the present disclosure is not limited thereto, and numerous other modifications and embodiments can be devised by those skilled in the art, without departing from the scope of the invention described in the appended claims.

### [Description of Reference Numerals]

10: battery module
100: heat dissipation member
130: heat insulation member
150: heat dispersion member
151: first heat dispersion part
152: second heat dispersion part
156: first depressed part
157: second depressed part
158: first indented part
159: second indented part
170: cooling member
1000: battery pack
1100: pack frame
1100a: upper part of the pack frame
1100b: bottom part of the pack frame
1200: thermal conductive resin layer
1300: heat sink

## Claims

1. A heat dissipation member (100) for a battery pack comprising:
a heat dispersion member (150) including a first heat dispersion part (151) and a second heat dispersion part (152); and
a heat insulating member (130) formed along an outer surface of the heat dispersion member (150), wherein:
the first heat dispersion part (151) and the second heat dispersion part (152) are integrally formed, and
the first heat dispersion part (151) and the second heat dispersion part (152) are formed so as to be partially spaced apart from each other,
wherein the heat dissipation member for a battery pack further comprises a first depressed part (156) formed in the first heat dispersion part (151), and a second depressed part (157) formed in the second heat dispersion part (152), and a cooling member (170) formed in the first depressed part (156) and the second depressed part (157).

2. The heat dissipation member (100) for a battery pack according to claim 1 wherein:
the first heat dispersion part (151) and the second heat dispersion part (152) are respectively bent and extended, and
the directions in which the first heat dispersion part (151) and the second heat dispersion part (152) are bent are directions opposite to each other.

3. The heat dissipation member (100) for a battery pack according to claim 1, further comprising:
a first indented part (158) formed in the first heat dispersion part (151); and
a second indented part (159) formed in the second heat dispersion part (152),
wherein the first indented part (158) and the second indented part (159) are formed so as to contact each other.

4. A battery pack (1000) comprising:
a plurality of battery modules (10); and
a heat dissipation member (100) according to any one of claims 1 to 3 located between adjacent battery modules (10) among the plurality of battery modules (10).

5. The battery pack (1000) according to claim 4 wherein:
the heat insulation member (130) is formed between the heat dispersion member (150) and the battery module (10).

6. The battery pack (1000) according to claim 4 wherein:
the heat insulation member (130) is formed so as to be in contact with the battery module (10).

7. The battery pack (1000) according to claim 4, further comprising:
a pack frame (1100) that houses the plurality of battery modules (10),
wherein the cooling member (170) is in contact with the upper part of the pack frame (1100a).

8. The battery pack (1000) according to claim 4 wherein:
the cooling member (170) is in contact with the upper inner surface of the pack frame (1100a).

9. The battery pack (1000) according to claim 4, further comprising:
a thermal conductive resin layer (1200) formed between a lower part of the battery module (10) and a bottom part of the pack frame (1100b).

10. The battery pack (1000) according to claim 9, further comprising:
a heat sink (1300) formed between a lower part of the thermal conductive resin layer (1200) and a bottom part of the pack frame (1100b).

## Patentansprüche

1. Wärmeableitungselement (100) für einen Batteriepack, umfassend:
ein Wärmedispersionselement (150), das einen ersten Wärmedispersionsteil (151) und einen zweiten Wärmedispersionsteil (152) beinhaltet; und
ein Wärmeisolierungselement (130), das entlang einer Außenoberfläche des Wärmedispersionselements (150) gebildet ist,
wobei:
der erste Wärmedispersionsteil (151) und der zweite Wärmedispersionsteil (152) einstückig gebildet sind, und
der erste Wärmedispersionsteil (151) und der zweite Wärmedispersionsteil (152) gebildet sind, um teilweise voneinander beabstandet zu sein,
wobei das Wärmeableitungselement für einen Batteriepack weiter einen ersten ver+e,en Teil (156), der in dem ersten Wärmedispersionsteil (151) gebildet ist, und einen zweiten ver+e,en Teil (157), der in dem zweiten Wärmedispersionsteil (152) gebildet ist, und ein Kühlelement (170), das in dem ersten ver+e,en Teil (156) und dem zweiten ver+e,en Teil (157) gebildet ist, umfasst.

2. Wärmeableitungselement (100) für einen Batteriepack nach Anspruch 1, wobei:
der erste Wärmedispersionsteil (151) und der zweite Wärmedispersionsteil (152) jeweils gebogen und erstreckt sind, und
die Richtungen, in die der erste Wärmedispersionsteil (151) und der zweite Wärmedispersionsteil (152) gebogen sind, zueinander entgegengesetzte Richtungen sind.

3. Wärmeableitungselement (100) für einen Batteriepack nach Anspruch 1, weiter umfassend:
einen ersten eingerückten Teil (158), der in dem ersten Wärmedispersionsteil (151) gebildet ist; und
einen zweiten eingerückten Teil (159), der in dem zweiten Wärmedispersionsteil (152) gebildet ist,
wobei der erste eingerückte Teil (158) und der zweite eingerückte Teil (159) gebildet sind, um einander zu berühren.

4. Batteriepack (1000), umfassend:
eine Vielzahl von Batteriemodulen (10); und
ein Wärmeableitungselement (100) nach einem der Ansprüche 1 bis 3, das sich zwischen benachbarten Batteriemodulen (10) aus der Vielzahl von Batteriemodulen (10) befindset.

5. Batteriepack (1000) nach Anspruch 4, wobei:
das Wärmeisolierungselement (130) zwischen dem Wärmedispersionselement (150) und
dem Batteriemodul (10) gebildet ist.

6. Batteriepack (1000) nach Anspruch 4, wobei:
das Wärmeisolierungselement (130) gebildet ist, um mit dem Batteriemodul (10) in Berührung zu stehen.

7. Batteriepack (1000) nach Anspruch 4, weiter umfassend:
einen Packrahmen (1100), der die Vielzahl von Batteriemodulen (10) aufnimmt,
wobei das Kühlelement (170) mit dem oberen Teil des Packrahmens (1100a) in Berührung steht.

8. Batteriepack (1000) nach Anspruch 4, wobei:
das Kühlelement (170) mit der oberen Innenoberfläche des Packrahmens (1100a) in Berührung steht.

9. Batteriepack (1000) nach Anspruch 4, weiter umfassend:
eine wärmeleitende Harzschicht (1200), die zwischen einem unteren Teil des Batteriemoduls (10) und einem Bodenteil des Packrahmens (1100b) gebildet ist.

10. Batteriepack (1000) nach Anspruch 9, weiter umfassend:
einen Kühlkörper (1300), der zwischen einem unteren Teil der wärmeleitenden Harzschicht (1200) und einem Bodenteil des Packrahmens (1100b) gebildet ist.

## Revendications

1. Un élément de dissipation de chaleur (100) pour un bloc-batterie comprenant :
un élément de dispersion de chaleur (150) incluant une première partie de dispersion de chaleur (151) et une seconde partie de dispersion de chaleur (152) ; et
un élément d'isolation thermique (130) formé le long d'une surface extérieure de l'élément de dispersion de chaleur (150),
dans lequel :
la première partie de dispersion de chaleur (151) et la seconde partie de dispersion de chaleur (152) sont formées d'un seul bloc, et
la première partie de dispersion de chaleur (151) et la seconde partie de dispersion de chaleur (152) sont formées de manière à être partiellement espacées l'une de l'autre,
dans lequel l'élément de dissipation de chaleur pour un bloc-batterie comprend en outre une première partie en creux (156) formée dans la première partie de dispersion de chaleur (151), et une seconde partie en creux (157) formée dans la seconde partie de dispersion de chaleur (152), et un élément de refroidissement (170) formé dans la première partie en creux (156) et la seconde partie en creux (157).

2. L'élément de dissipation de chaleur (100) pour un bloc-batterie selon la revendication 1, dans lequel :
la première partie de dispersion de chaleur (151) et la seconde partie de dispersion de chaleur (152) sont respectivement pliées et étendues, et
les directions dans lesquelles la première partie de dispersion de chaleur (151) et la seconde partie de dispersion de chaleur (152) sont pliées sont des directions opposées l'une à l'autre.

3. L'élément de dissipation de chaleur (100) pour un bloc-batterie selon la revendication 1, comprenant en outre :
une première partie indentée (158) formée dans la première partie de dispersion de chaleur (151) ; et
une seconde partie indentée (159) formée dans la seconde partie de dispersion de chaleur (152),
dans lequel la première partie indentée (158) et la seconde partie indentée (159) sont formées de manière à entrer en contact l'une avec l'autre.

4. Un bloc-batterie (1000) comprenant :
une pluralité de modules de batterie (10) ; et
un élément de dissipation de chaleur (100) selon l'une quelconque des revendications 1 à 3, situé entre des modules de batterie adjacents (10) parmi la pluralité de modules de batterie (10).

5. Le bloc-batterie (1000) selon la revendication 4, dans lequel :
l'élément d'isolation thermique (130) est formé entre l'élément de dispersion de chaleur (150) et le module de batterie (10).

6. Le bloc-batterie (1000) selon la revendication 4, dans lequel :
l'élément d'isolation thermique (130) est formé de manière à être en contact avec le module de batterie (10).

7. Le bloc-batterie (1000) selon la revendication 4, comprenant en outre :
un cadre de bloc (1100) qui loge la pluralité de modules de batterie (10),
dans lequel l'élément de refroidissement (170) est en contact avec la partie supérieure du cadre de bloc (1100a).

8. Le bloc-batterie (1000) selon la revendication 4, dans lequel :
l'élément de refroidissement (170) est en contact avec la surface intérieure supérieure du cadre de bloc (1100a).

9. Le bloc-batterie (1000) selon la revendication 4, comprenant en outre :
une couche de résine thermoconductrice (1200) formée entre une partie inférieure du module de batterie (10) et une partie de fond du cadre de bloc (1100b).

10. Le bloc-batterie (1000) selon la revendication 9, comprenant en outre :
un dissipateur thermique (1300) formé entre une partie inférieure de la couche de résine thermoconductrice (1200) et une partie de fond du cadre de bloc (1100b).
